# EUROPÄISCHE PATENTSCHRIFT

(11) **EP 2 312 194 B1**
(45) Veröffentlichungstag und Bekanntmachung des Hinweises auf die Patenterteilung: **26.12.2012**
(21) Anmeldenummer: 10192297.9
(22) Anmeldetag: 17.01.2006
(51) Int. Cl.: F16M 13/02, B25B 11/00

(54) **Befestigungseinrichtung**
Attachment device
Dispositif de fixation

(30) Priorität: 18.02.2005 DE 102005009315
(43) Veröffentlichungstag der Anmeldung: 20.04.2011
(62) Teilanmeldung aus: 06706258.8
(73) Patentinhaber: Alfred Kärcher GmbH & Co. KG, 71364 Winnenden (DE)
(72) Erfinder: Gassmann, Jürgen, 71409 Schwaikheim (DE); Rust, Hendrik, 73630 Remshalden-Hebsack (DE); Stewen, Christian, 71672 Marbach a. N. (DE)
(74) Vertreter: Hoeger, Stellrecht & Partner Patentanwälte

(56) Entgegenhaltungen:
- DE-A1- 19 646 890
- US-A- 5 184 858
- US-A- 5 342 153
- US-A- 5 775 395
- US-A- 5 795 001
- US-A1- 2002 043 599

## Beschreibung

Die Erfindung betrifft eine Befestigungseinrichtung zum lösbaren Befestigen eines Gegenstandes an einem Untergrund, insbesondere einer Wand oder einer Decke, mit den Merkmalen des Oberbegriffes von Patentanspruch 1.

Mittels einer Befestigungseinrichtung mit einer Saugplatte, an der ein Dichtring gehalten ist zur Anlage an dem Untergrund, und mit einer elektrischen Vakuumpumpe, mit der ein vom Dichtring abdichtbarer Zwischenraum zwischen der Saugplatte und dem Untergrund mit Unterdruck beaufschlagbar ist, kann ein Gegenstand, beispielsweise ein Messgerät, eine Markierungseinrichtung oder auch ein Schmutzauffanggerät, zeitweilig an einem Untergrund befestigt werden, insbesondere an einer Wand oder einer Decke. Hierzu kann die Saugplatte unter Zwischenlage des Dichtringes an den Untergrund angelegt werden, und anschließend kann mittels der Vakuumpumpe der Zwischenraum zwischen der Saugplatte und dem Untergrund abgesaugt werden und somit mit Unterdruck beaufschlagt werden. Dies hat zur Folge, dass die Saugplatte pneumatisch am Untergrund anhaftet.

Aus der WO 03/072964 A1 ist eine Befestigungseinrichtung bekannt, bei der von der Saugplatte auf deren dem Dichtring abgewandter Rückseite die elektrische Vakuumpumpe absteht und in die Saugplatte eine Ausnehmung eingeformt ist, die eine eisenhaltige Stützplatte aufnimmt. Dies gibt die Möglichkeit, an der Stützplatte mit Hilfe eines Magneten insbesondere eine Messeinrichtung festzulegen. Zusätzlich zur Vakuumpumpe nimmt die Saugplatte auch ein Manometer auf, mit dessen Hilfe der Unterdruck zwischen der Saugplatte und dem Untergrund gemessen werden kann. Mit Hilfe von Stützstiften, die von der Saugplatte in Richtung Untergrund abstehen, kann ein definierter Abstand zwischen der Saugplatte und dem Untergrund eingehalten werden.

Die bekannte Befestigungseinrichtung ist unhandlich und schwer und erfordert die Bereitstellung einer Netzspannung, an die die elektrische Vakuumpumpe mittels eines Anschlusskabels angeschlossen werden kann.

Aus der Veröffentlichung US 2002/043599 A1 ist eine Befestigungseinrichtung mit den Merkmalen des Oberbegriffes von Patentanspruch 1 bekannt. Die Befestigungseinrichtung umfasst einen Saugnapf mit einem plattenartigen Boden und einem kegelstumpfförmigen Mantel, der mit seinem freien Rand an eine Wand angelegt werden kann. Auf der dem Mantel abgewandten Seite des Bodens ist ein Gehäuse angeordnet, das eine Vakuumpumpe, eine wiederaufladbare Batterie und ein Schaltorgan zum Ein- und Ausschalten der Vakuumpumpe aufnimmt. Mittels der Vakuumpumpe kann der Innenraum des Saugnapfes mit Unterdruck beaufschlagt werden, so dass dieser pneumatisch an der Wand anhaftet.

Aus der US 5,795,001 ist eine Vorrichtung zur Handhabung von Gegenständen bekannt, bei der an einem Saugnapf ein Gehäuse mit einem Handgriff angeordnet ist. Der Saugnapf kann an einen Gegenstand angelegt und von einer im Handgriff positionierten Vakuumpumpe mit Unterdruck beaufschlagt werden. Zu diesem Zweck ist die Vakuumpumpe über einen Strömungskanal mit dem Innenraum des Saugnapfes verbunden. Der Strömungskanal wird vom Gehäuse ausgebildet, das den Handgriff aufweist. Wird der Saugnapf mit Unterdruck beaufschlagt, so haftet er am Gegenstand an und dieser kann mittels des Handgriffes angehoben werden.

Aufgabe der vorliegenden Erfindung ist es, eine Befestigungseinrichtung der eingangs genannten Art derart weiterzubilden, dass mit ihrer Hilfe eine Bohrschmutzauffangeinrichtung temporär an einem Untergrund befestigt werden kann.

Diese Aufgabe wird durch eine Befestigungseinrichtung mit den Merkmalen von Patentanspruch 1 gelöst.

Die erfindungsgemäße Befestigungseinrichtung bildet ein autarkes Gerät aus, mit dem eine Bohrschmutzauffangeinrichtung zeitweilig an einem Untergrund, insbesondere einer Wand oder einer Decke, befestigt werden kann, ohne dass eine Netzspannung und ein Anschlusskabel bereitgestellt werden müssen. Dies ermöglicht es insbesondere, die Befestigungseinrichtung in Räumen ohne Netzanschluss zu betreiben, beispielsweise in einem Rohbau. Außerdem zeichnet sich die erfindungsgemäße Befestigungseinrichtung durch eine einfache Handhabung aus, denn sämtliche Bauteile der Befestigungseinrichtung sind in das Gehäuse integriert, das beispielsweise quaderförmig oder zylinderförmig ausgestaltet sein kann und vom Benutzer auf einfache Weise ergriffen werden kann. Durch Betätigung des elektrischen Schaltorganes kann die im Gehäuse angeordnete Vakuumpumpe in Gang gesetzt werden, deren elektrische Energie von der ebenfalls im Gehäuse angeordneten, vorzugsweise wiederaufladbaren Batterie bereitgestellt wird. Mittels der Vakuumpumpe kann bei am Untergrund angelegtem Gehäuse der Zwischenraum zwischen der Saugplatte des Gehäuses und dem Untergrund abgesaugt werden, so dass das Gehäuse pneumatisch am Untergrund anhaftet. Das Anhaften erfolgt solange wie die Vakuumpumpe in Betrieb ist. Wird sie mittels des elektrischen Schaltorganes ausgeschaltet, so kann aufgrund von Leckagen eine Belüftung des Zwischenraumes erfolgen, so dass das Gehäuse auf einfache Weise vom Benutzer wieder vom Untergrund gelöst werden kann.

Das Gehäuse der Befestigungseinrichtung bildet einen Strömungskanal aus, der mit der Vakuumpumpe in Strömungsverbindung steht und in dem vom Dichtring umgebenen Bereich die Saugplatte durchgreift. Der Strömungskanal bildet zumindest einen Teil einer Saugleitung aus, über die der abzusaugende Zwischenraum mit der Vakuumpumpe in Strömungsverbindung steht.

Es kann vorgesehen sein, dass der Strömungskanal über einen innerhalb des Gehäuses angeordneten flexiblen Saugschlauch mit der Vakuumpumpe verbunden ist. Die flexible Verbindung der Vakuumpumpe über den Saugschlauch mit dem starren Strömungskanal erleichtert das Einsetzen der Vakuumpumpe bei der Montage der Befestigungseinrichtung.

Bei der erfindungsgemäßen Befestigungseinrichtung verläuft der Strömungskanal in einer Zwischenwand des Gehäuses. Durch die Zwischenwand kann die mechanische Belastbarkeit des Gehäuses erhöht werden und gleichzeitig kann mit ihrer Hilfe ein Strömungskanal bereitgestellt werden. Dies ermöglicht es, die Befestigungseinrichtung besonders kostengünstig herzustellen und zu montieren.

Die Zwischenwand unterteilt das Gehäuse in zwei Gehäusekammern, wobei eine erste Gehäusekammer die Vakuumpumpe, die Batterie und das Schaltorgan aufnimmt. Sämtliche elektrischen Bauteile der Befestigungseinrichtung sind somit in der ersten Gehäusekammer angeordnet und dadurch vor Umwelteinflüssen geschützt. Bei Einsatz eines Belüftungselementes kann dieses ebenfalls in der ersten Gehäusekammer angeordnet sein. Vorzugsweise ist die erste Gehäusekammer dem Benutzer nach Entfernen eines Deckels zugänglich zum Austausch der Batterie, die bei einer besonders bevorzugten Ausführungsform wiederaufladbar ausgestaltet ist.

Mittels der Befestigungseinrichtung kann eine Bohrschmutzauffangeinrichtung temporär an einem Untergrund, insbesondere einer Wand oder einer Decke, befestigt werden. Mittels der Bohrschmutzauffangeinrichtung kann während des Einbringens einer Bohrung in den Untergrund anfallender Bohrschmutz, also Bohrmaterial und Bohrstaub, aufgefangen werden. Hierzu ist bei der erfindungsgemäßen Befestigungseinrichtung vorgesehen, dass in die zweite Gehäusekammer eine Bohrschmutzauffangeinrichtung integriert ist und die zweite Gehäusekammer von einem Bohrer durchsetzbar ist zum Einbringen einer Bohrung in den Untergrund, wobei die zweite Gehäusekammer einen Bohrschmutzsammelraum definiert und mindestens eine Reinigungseinrichtung aufnimmt zum Abreinigen des Bohrers. Zum Einbringen einer Bohrung in den Untergrund kann das Gehäuse an den Untergrund angelegt und durch Einschalten der Vakuumpumpe an diesem pneumatisch festgelegt werden, wie dies voranstehend bereits erläutert wurde. Es kann dann ein drehfest an einer Bohrmaschine gehaltener Bohrer durch die zweite Gehäusekammer hindurchgeführt werden zum Einbringen einer Bohrung in den Untergrund. Anfallender Bohrschmutz wird vom Bohrer nach Art eines Schneckenförderers in den Innenraum der zweiten Gehäusekammer überführt und sammelt sich im Bohrschmutzsammelraum an. Zum Abreinigen des Bohrers während des Einbringens der Bohrung und/oder beim Herausziehen des Bohrers aus der zweiten Gehäusekammer nimmt diese zumindest eine Reinigungseinrichtung auf. Dadurch ist sichergestellt, dass der Bohrschmutz innerhalb des Bohrschmutzsammelraumes verbleibt und nicht in den Außenbereich des Gehäuses gelangt.

Die erfindungsgemäße Befestigungseinrichtung ist kostengünstig herstellbar. Hierzu ist es von Vorteil, wenn die Vakuumpumpe in Form einer Membranpumpe ausgestaltet ist.

Bei einer vorteilhaften Ausführungsform umfasst die Befestigungseinrichtung ein Verbindungselement zum lösbaren Verbinden eines Gegenstandes mit dem Gehäuse. So kann beispielsweise in das Gehäuse eine Durchgangsöffnung eingeformt sein, in die ein Halteorgan des Gegenstandes, insbesondere ein Haltebügel, eingesetzt werden kann. Alternativ oder ergänzend kann vorgesehen sein, dass das Verbindungselement eine Aufnahme umfasst zum formschlüssigen Verbinden des Gehäuses mit dem Gegenstand.

Die Aufnahme kann beispielsweise als T-förmige oder schwalbenschwanzförmige Nut ausgebildet sein, in die eine korrespondierend ausgebildete Leiste des Gegenstandes eingeführt werden kann. Dies ermöglicht eine lösbare Verbindung des Gehäuses mit dem Gegenstand und hat den Vorteil, dass unterschiedliche Gegenstände mit dem Gehäuse der Befestigungseinrichtung verbunden werden können. So kann beispielsweise vorgesehen sein, dass das Gehäuse mit einer Positionsbestimmungseinrichtung, einer Messeinrichtung, beispielsweise einem aufrollbaren Maßband, und/oder mit einer Markierungseinrichtung, beispielsweise einer Lasermarkierungseinrichtung, verbunden werden kann. Dies gibt zum Beispiel die Möglichkeit, eine bestimmte Position eines Bohrloches, das in den Untergrund eingebracht werden soll, auszumessen und zu markieren.

Als mit dem Gehäuse lösbar verbindbarer Gegenstand kann auch eine Libelle zum Einsatz kommen zum horizontalen und/oder vertikalen Ausrichten der Befestigungseinrichtung an einer Wand oder einer Decke.

Alternativ oder ergänzend kann als Verbindungselement auch ein Klebekissen zum Einsatz kommen, das am Gehäuse gehalten ist und vorzugsweise von einer abziehbaren Schutzfolie bedeckt ist. Mittels des Klebekissens kann ein temporär am Untergrund zu befestigender Gegenstand mit dem Gehäuse der Befestigungseinrichtung lösbar verklebt werden.

Der an der Saugplatte gehaltene Dichtring ist bevorzugt aus einem elastisch verformbaren Material gefertigt. Günstig ist es, wenn er an leicht gekrümmte Oberflächen des Untergrundes anpassbar und spaltfüllend ist, so dass der vom Dichtring umgebene Bereich der Saugplatte luftdicht abgedichtet werden kann, wenn die Saugplatte unter Zwischenschaltung des Dichtringes an den Untergrund angelegt wird.

Wie bereits erläutert, lässt sich die Befestigungseinrichtung pneumatisch an einem Untergrund festlegen, indem der vom Dichtring abgedichtete Zwischenraum zwischen der Saugplatte und dem Untergrund mittels der Vakuumpumpe abgesaugt wird. Zum Abnehmen der Befestigungseinrichtung vom Untergrund ist es in vielen Fällen ausreichend, die Vakuumpumpe auszuschalten, da dann aufgrund von Leckagen der Zwischenraum belüftet wird. Bei einer Befestigung an einem glatten Untergrund ist es allerdings von Vorteil, wenn die Befestigungseinrichtung ein Belüftungselement aufweist zum Belüften des Zwischenraumes. Der glatte Untergrund kann zur Folge haben, dass der Zwischenraum beim Ausschalten der Vakuumpumpe nur langsam aufgrund von Leckagen belüftet wird. Mit Hilfe des Belüftungselementes kann jedoch der Zwischenraum innerhalb sehr kurzer Zeit belüftet werden, so dass der Unterdruck im Zwischenraum entfällt und folglich die Befestigungseinrichtung auf einfache Weise vom Untergrund entfernt werden kann.

Das Belüftungselement kann elektrisch betätigbar sein. Insbesondere kann vorgesehen sein, dass das Belüftungselement mit der Vakuumpumpe gekoppelt ist dergestalt, dass das Belüftungselement den Zwischenraum belüftet, wenn die Vakuumpumpe abgeschaltet wird.

Bei einer konstruktiv besonders einfachen und kostengünstig herstellbaren Ausführungsform ist das Belüftungselement manuell betätigbar. Es kann somit vom Benutzer zum Belüften des Zwischenraumes betätigt werden.

Es kann beispielsweise vorgesehen sein, dass das Belüftungselement ein federelastisch in eine Schließstellung vorgespanntes Belüftungsventil umfasst. Mittels des Belüftungsventiles kann eine Strömungsverbindung zwischen dem Zwischenraum und der Umgebung der Befestigungseinrichtung gesteuert werden. Im unbetätigten Zustand nimmt das Belüftungsventil aufgrund seiner Federbelastung eine Schließstellung ein, so dass die Strömungsverbindung zwischen dem Zwischenraum und der Umgebung unterbrochen ist. Zur Belüftung des Zwischenraumes wird der Schaltzustand des Belüftungsventiles geändert, so dass dieses in seine Offenstellung übergeht und dadurch der Zwischenraum belüftet werden kann.

Bei einer vorteilhaften Ausführungsform wirkt das Belüftungsventil mit einem manuell betätigbaren Schaltstößel zusammen. Durch Betätigung des Schaltstößels kann die Schaltstellung des Belüftungsventiles geändert werden, insbesondere kann das Belüftungsventil entgegen der Einwirkung einer Federkraft in seine Offenstellung überführt werden.

Günstig ist es, wenn der Schaltstößel eine dem Untergrund abgewandte Rückwand des Gehäuses durchgreift und nach außen über die Rückwand vorsteht.

Das Belüftungselement kann ebenso wie die Vakuumpumpe, die Batterie und das elektrische Schaltorgan innerhalb des Gehäuses angeordnet sein.

Von besonderem Vorteil ist es, wenn im Strömungskanal ein Filterelement angeordnet ist, vorzugsweise ist das Filterelement in den Strömungskanal einschiebbar. Mittels des Filterelementes kann vermieden werden, dass die Vakuumpumpe mit Schmutzpartikel in Kontakt kommt. Dadurch kann die Lebensdauer der Vakuumpumpe verlängert werden.

Günstig ist es, wenn das Filterelement den Strömungskanal vollständig ausfüllt. Vorzugsweise weist das Filterelement ein Papierfilter auf, das in den Strömungskanal einsetzbar ist.

Es kann beispielsweise vorgesehen sein, dass eine erste Reinigungseinrichtung zumindest eine den Bohrer beim Herausziehen aus der zweiten Gehäusekammer abstreifende erste Reinigungsbürste umfasst. Mittels der ersten Reinigungsbürste kann der Bohrer nach dem Einbringen einer Bohrung in den Untergrund abgestreift werden, während er aus der zweiten Gehäusekammer herausgezogen wird.

Alternativ oder ergänzend zu der mindestens einen ersten Reinigungsbürste können flexible Reinigungselemente zum Einsatz kommen, beispielsweise Gummistreifen, die den Bohrer beim Herausziehen aus der zweiten Gehäusekammer abstreifen und somit von anhaftendem Bohrschmutz befreien.

Bevorzugt ist eine erste Reinigungsbürste ringförmig ausgestaltet und vom Bohrer durchsetzbar. Damit ist auf konstruktiv einfache Weise sichergestellt, dass der am Bohrer entlang seines Umfanges anhaftende Bohrschmutz entfernt werden kann.

Es kann auch vorgesehen sein, dass eine erste Reinigungsbürste als Doppelbürste ausgestaltet ist und zwei einander zugewandte Borstenreihen aufweist, die zwischen sich den Bohrer aufnehmen. Die Borstenreihen sind kostengünstig herstellbar, und durch den Einsatz zweier einander zugewandter Borstenreihen kann der Bohrer in Umfangsrichtung praktisch vollständig abgereinigt werden.

Bei einer vorteilhaften Ausführungsform weist die zweite Gehäusekammer zwei fluchtend zueinander angeordnete, vom Bohrer durchsetzbare Gehäuseöffnungen auf, wobei eine stirnseitige Gehäuseöffnung dem Untergrund zugewandt und eine rückseitige Gehäuseöffnung dem Untergrund abgewandt ist und wobei die erste Reinigungseinrichtung die rückseitige Gehäuseöffnung zumindest teilweise überdeckt. Dadurch ist sichergestellt, dass auch beim Einbringen einer Bohrung in eine Decke kein Bohrschmutz durch die zweite Gehäusekammer hindurch fallen kann, vielmehr wird sämtlicher Bohrschmutz innerhalb der zweiten Gehäusekammer von der ersten Reinigungseinrichtung zurückgehalten, die die rückseitige Gehäuseöffnung zumindest teilweise überdeckt und diese zusammen mit dem die zweite Gehäusekammer durchgreifenden Bohrer verschießt.

Günstig ist es, wenn die erste Reinigungseinrichtung der stirnseitigen Gehäuseöffnung zugewandt eine Abdeckung aufweist. Dadurch wird die Gefahr besonders gering gehalten, dass beim Einbringen einer Bohrung in eine Decke Bohrschmutz durch das Gehäuse hindurchfällt.

Vorzugsweise ist die Abdeckung an den Außenumfang des Bohrers anlegbar.

Es kann vorgesehen sein, dass die Abdeckung aus einem flexiblen Material, beispielsweise einem gummiartigen Material, gefertigt ist. Insbesondere kann die Abdeckung in Form einer Membran ausgebildet sein.

Die Abdeckung überdeckt bei einer bevorzugten Ausführungsform der Erfindung die rückseitige Gehäuseöffnung.

Als vorteilhaft hat es sich erwiesen, die Abdeckung kegelmantelförmig auszugestalten, denn dadurch kann auf konstruktiv einfache Weise Bohrschmutz in radialer Richtung vom Bohrer entfernt werden, der die Abdeckung zentral durchgreift.

Bei einer besonders bevorzugten Ausführungsform umfasst eine zweite Reinigungseinrichtung zumindest eine den rotierenden Bohrer beim Bohren abstreifende zweite Reinigungsbürste. Es gibt die Möglichkeit, während des Einbringens einer Bohrung in den Untergrund am Bohrer anhaftender Bohrschmutz von diesem zu entfernen und in den Bohrschmutzsammelraum zu überführen. Wie bereits erläutert, bildet der rotierende Bohrer einen Schneckenförderer aus, der den anfallenden Bohrschmutz aus dem Bohrloch heraus transportiert und in das Innere der zweiten Gehäusekammer überführt. In der zweiten Gehäusekammer wird der rotierende Bohrer von der mindestens einen zweiten Reinigungsbürste abgestreift und somit von Bohrschmutz befreit.

Der kombinierte Einsatz einer ersten Reinigungsbürste, die den Bohrer beim Herausziehen aus der zweiten Gehäusekammer abstreift, und einer zweiten Reinigungsbürste, die den rotierenden Bohrer beim Einbringen einer Bohrung in den Untergrund abstreift, hat sich als besonders vorteilhaft erwiesen, um praktisch sämtlichen anfallenden Bohrschmutz aufzufangen und sicherzustellen, dass auch beim Herausziehen des Bohrers aus der zweiten Gehäusekammer kein Bohrschmutz entweichen kann.

Von Vorteil ist es, wenn die zweite Reinigungsbürste zwischen der ersten Reinigungsbürste und der stirnseitigen Gehäuseöffnung angeordnet ist. Bei einer derartigen Anordnung wird der rotierende Bohrer während des Bohrens zunächst von der zweiten Reinigungsbürste abgebürstet, insbesondere wird die mindestens eine wendelförmige Bohrnut des Bohrers von Bohrschmutz befreit. Bohrschmutzreste, die von der zweiten Reinigungsbürste nicht erfasst werden, werden in der Bohrnut vom rotierenden Bohrer zur ersten Reinigungsbürste überführt und von dieser abgebürstet. Die Reinigungswirkung der ersten Reinigungsbürste entfaltet sich somit nicht erst beim Herausziehen des Bohrers aus der zweiten Gehäusekammer sondern auch während des Bohrens. Dadurch wird eine optimale Abreinigung des Bohrers erzielt.

Es kann vorgesehen sein, dass die zweite Reinigungsbürste ringförmig ausgestaltet und vom Bohrer durchsetzbar ist. Mittels der zweiten Reinigungsbürste wird der rotierende Bohrer bei einer derartigen Ausgestaltung in Umfangsrichtung von allen Seiten gleichzeitig abgebürstet. Insbesondere lässt sich dadurch auf konstruktiv einfache Weise mindestens eine Bohrnut, in der der Bohrschmutz aus dem Bohrloch herausgeführt wird, zuverlässig abreinigen.

Bei einer besonders vorteilhaften Ausführungsform weist eine zweite Reinigungsbürste zumindest eine Borstenreihe auf, die parallel oder in einem spitzen Winkel zur Bohrerlängsachse ausgerichtet ist. Der in der Bohrnut des Bohrers aus dem Bohrloch herausgeführte Bohrschmutz wird bei einer derartigen Ausgestaltung innerhalb der zweiten Gehäusekammer seitlich der zweiten Reinigungsbürste zugeführt und kann von dieser zuverlässig abgebürstet werden.

Bevorzugt ist eine zweite Reinigungsbürste als Doppelbürste ausgebildet und weist zwei einander zugewandte Borstenreihen auf, die zwischen sich den Bohrer aufnehmen. Hierbei ist es von besonderem Vorteil, wenn die beiden Borstenreihen parallel oder in einem spitzen Winkel zur Bohrerlängsachse ausgerichtet sind. Eine derartige Ausrichtung ist allerdings nicht zwingend erforderlich, es kann auch vorgesehen sein, dass die beiden Borstenreihen eine Ausrichtung senkrecht zur Bohrerlängsachse aufweisen.

Um zu vermeiden, dass sich während des Bohrens zwischen dem Untergrund und der Außenwand der zweiten Gehäusekammer Bohrschmutz ansammeln kann, ist bei einer besonders vorteilhaften Ausführungsform vorgesehen, dass die stirnseitige Gehäuseöffnung von einer Schmutzführungshülse durchgriffen ist. Mittels der Schmutzführungshülse wird im Bereich der stirnseitigen Gehäuseöffnung Bohrschmutz zuverlässig in den Bohrschmutzsammelraum der zweiten Gehäusekammer überführt.

Von besonderem Vorteil ist es, wenn die Schmutzführungshülse außenseitig über die zweite Gehäusekammer hervorsteht. Dies hat den Vorteil, dass die Schmutzführungshülse unmittelbar an den Untergrund angelegt werden kann.

Günstig ist es, wenn die Schmutzführungshülse in ihrem nach außen vorstehenden Bereich von einem Dichtring umgeben ist. Letzterer ist vorzugsweise aus einem elastisch verformbaren Material gefertigt. Insbesondere kann er derart ausgestaltet sein, dass er an leicht gekrümmte Oberflächen des Untergrundes anpassbar und spaltfüllend ist, so dass der Bereich zwischen dem Bohrloch und der stirnseitigen Gehäuseöffnung der zweiten Gehäusekammer auch auf einem rauhen Untergrund zuverlässig staubdicht abgedichtet ist.

Um zu vermeiden, dass beim Abnehmen der zweiten Gehäusekammer vom Untergrund über die stirnseitige Gehäuseöffnung Bohrschmutz entweichen kann, ist es von Vorteil, wenn die Schmutzführungshülse in die zweite Gehäusekammer hineinragt. Sie bildet dadurch einen von der stirnseitigen Gehäuseöffnung nach innen vorstehenden Kragen, der innerhalb der zweiten Gehäusekammer angesammelten Bohrschmutz in der zweiten Gehäusekammer zurückhält.

Von Vorteil ist es, wenn sich die Schmutzführungshülse in das Innere der zweiten Gehäusekammer konisch erweitert. Dadurch ist sichergestellt, dass der sich auf der Schmutzführungshülse ablagernde Bohrschmutz selbsttätig an der Schmutzführungshülse entlang gleitet und somit in den Innenraum der zweiten Gehäusekammer überführt wird.

Die Schmutzführungshülse ist bei einer vorteilhaften Ausführungsform aus Metall gefertigt, insbesondere aus gehärtetem Metall.

Günstig ist es, wenn die Schmutzführungshülse an der zweiten Gehäusekammer auswechselbar gehalten ist, denn dies gibt die Möglichkeit, die Schmutzführungshülse auf einfache Weise auszuwechseln.

Bei einer vorteilhaften Ausführungsform ist die rückseitige Gehäuseöffnung von einer Führungsbuchse durchgriffen. Mittels der Führungsbuchse wird das Einführen des Bohrers in die zweite Gehäusekammer und auch dessen Ausrichtung beim Bohren vereinfacht.

Von Vorteil ist es hierbei, wenn die Führungsbuchse an der rückseitigen Gehäuseöffnung auswechselbare gehalten ist, denn dies gibt die Möglichkeit, in Abhängigkeit vom Durchmesser des zum Einsatz kommenden Bohrers eine entsprechend angepasste Führungsbuchse an der rückseitigen Gehäuseöffnung festzulegen.

Die Führungsbuchse ist günstigerweise aus Metall gefertigt, insbesondere aus gehärtetem Metall.

Es kann vorgesehen sein, dass der lichte Durchmesser der Führungsbuchse dem lichten Durchmesser der Schmutzführungshülse entspricht. Dadurch wird das Ausrichten des Bohrers bei Einbringen einer Bohrung in den Untergrund vereinfacht.

Von Vorteil ist es, wenn die Führungsbuchse nach außen aus der zweiten Gehäusekammer herausragt. Sie kann in diesem herausragenden Bereich einen Bund ausbilden, mit dem sie außenseitig an die zweite Gehäusekammer anlegbar ist.

Vorzugsweise ragt die Führungsbuchse nach innen in die zweite Gehäusekammer hinein. Sie kann im Innern der Gehäusekammer einen von der rückseitigen Gehäuseöffnung abstehenden Kragen ausbilden, der die Gefahr vermindert, dass beim Abnehmen der zweiten Gehäusekammer vom Untergrund Bohrschmutz aus der zweiten Gehäusekammer über die rückseitige Gehäuseöffnung entweichen kann.

Zum Abreinigen des Bohrers kann ergänzend oder alternativ zu der ersten oder zweiten Reinigungsbürste auch eine Turbine zum Einsatz kommen. Die Turbine kann in der ersten oder der zweiten Gehäusekammer angeordnet sein und während des Einbringens einer Bohrung den Bohrer innerhalb des Gehäuses absaugen oder abblasen.

Die nachfolgende Beschreibung einer vorteilhaften Ausführungsform der Erfindung dient im Zusammenhang mit der Zeichnung der näheren Erläuterung. Es zeigen:
- Figur 1:: eine schematische Schnittansicht einer ersten Befestigungseinrichtung;
- Figur 2:: eine schematische Schnittansicht einer zweiten Befestigungseinrichtung;
- Figur 3:: eine schematische Schnittansicht einer erfindungsgemäßen Befestigungseinrichtung mit integrierter Bohrschmutzauffangeinrichtung;
- Figur 4:: eine Schnittansicht einer zweiten Reinigungsbürste der Bohrschmutzauffangeinrichtung entlang der Linie 4-4 in Figur 3;
- Figur 5:: eine Ansicht der zweiten Reinigungsbürste in Richtung von Pfeil A aus Figur 4;
- Figur 6:: eine Schnittansicht einer ersten Reinigungsbürste der Bohrschmutzauffangeinrichtung längs der Linie 6-6 in Figur 3 und
- Figur 7:: eine Schnittansicht einer alternativen Ausgestaltung einer ersten und/oder zweiten Reinigungsbürste der Bohrschmutzauffangeinrichtung aus Figur 3.

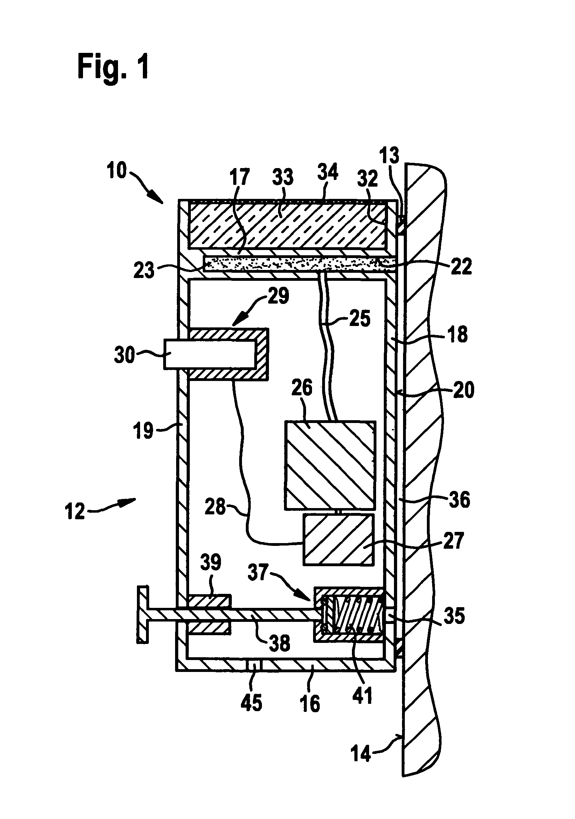

In Figur 1 ist schematisch eine erste Befestigungseinrichtung dargestellt, die insgesamt mit dem Bezugszeichen 10 belegt ist. Sie umfasst ein Gehäuse 12, das unter Zwischenlage eines Dichtringes 13 an einen Untergrund 14, beispielsweise eine Gebäudewand oder eine Gebäudedecke, anlegbar ist. Das Gehäuse 12 weist eine Bodenwand 16 auf und eine Deckenwand 17, die über eine Stirnwand 18 und eine Rückwand 19 einstückig miteinander verbunden sind. Die Stirnwand 18 bildet eine Saugplatte aus, an deren Außenseite 20 der Dichtring 13 auswechselbar gehalten ist.

In die Deckenwand 17 ist ein Strömungskanal 22 eingeformt, der die Stirnwand 18 durchgreift und vollständig von einem Filterelement 23 ausgefüllt ist.

Über einen flexiblen Saugschlauch 25 steht der Strömungskanal 22 mit einer elektrischen Membranpumpe 26 in Strömungsverbindung, die innerhalb des Gehäuses 12 angeordnet ist und die mit einer elektrischen Batterie 27 verbunden ist und über ein Verbindungskabel 28 mit einem im Gehäuse 12 angeordneten elektromechanischen Schaltorgan 29 in elektrischer Verbindung steht, das ein die Rückwand 19 durchgreifendes Betätigungselement 30 aufweist.

In die Stirnwand 18 ist eine Belüftungsöffnung 35 eingeformt, an der innenseitig ein Belüftungselement in Form eines Belüftungsventils 37 gehalten ist, das mittels eines Schaltstößels 38, der die Rückwand 19 durchgreift und innerhalb des Gehäuses 12 in einer Führungshülse 39 geführt ist, betätigt werden kann. Das Belüftungsventil 37 umfasst eine Schließfeder 41, die das Belüftungsventil 37 selbsttätig in seine Schließstellung vorspannt. Durch Drücken des Schaltstößels 38 kann der Benutzer das Belüftungsventil 37 entgegen der Wirkung der Schließfeder 41 in eine Offenstellung überführen, in der es eine Strömungsverbindung freigibt zwischen der Belüftungsöffnung 35 und einer in die Bodenwand 16 eingeformten Durchgangsöffnung 45.

Oberseitig bildet das Gehäuse 12 eine wannenförmige Aufnahme 32 aus, in die ein Klebekissen 33 eingesetzt ist, das von einer abziehbaren Schutzfolie 34 überdeckt ist.

Soll ein Gegenstand, beispielsweise eine Messeinrichtung, eine Markierungseinrichtung oder ein sonstiges Objekt zeitweilig am Untergrund 14 befestigt werden, so kann hierzu das Gehäuse 12 an den Untergrund 14 angelegt werden, und durch Betätigen des Schaltorganes 29 kann die Membranpumpe 26 in Gang gesetzt werden, so dass ein vom Dichtring 13 luftdicht abgedichteter Zwischenraum 36 zwischen der Stirnwand 18 und dem Untergrund 14 abgesaugt und somit mit Unterdruck beaufschlagt wird. Aufgrund des sich ausbildenden Unterdruckes haftet die Befestigungseinrichtung 10 am Untergrund 14, ohne dass dieser beschädigt wird. Ein temporär zu befestigender Gegenstand kann nun durch Ablösen der Schutzfolie 34 mit dem Klebekissen 33 verbunden werden, so dass er über das Klebekissen 33 am Gehäuse 12 zuverlässig gehalten ist.

Soll die Befestigungseinrichtung 10 wieder vom Untergrund 14 entfernt werden, so wird hierzu die Membranpumpe 26 abgeschaltet und kurzzeitig der Schaltstößel 38 betätigt, so dass der Zwischenraum 36 über die Belüftungsöffnung 35, den Innenraum des Gehäuses 12 und die Durchgangsöffnung 45 belüftet wird. Die Befestigungseinrichtung 10 kann dann vom Benutzer wieder vom Untergrund 14 entfernt werden.

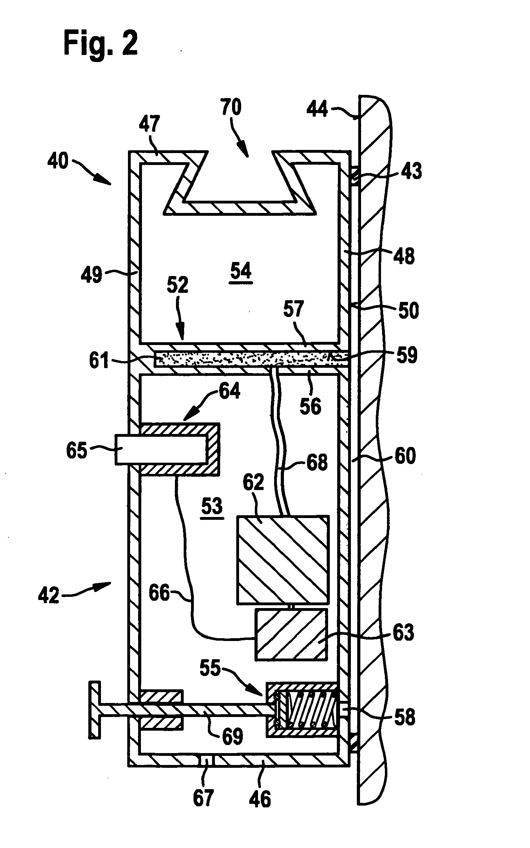

In Figur 2 ist eine zweite Ausführungsform einer Befestigungseinrichtung dargestellt und insgesamt mit dem Bezugszeichen 40 belegt. Sie ist weitgehend identisch ausgebildet wie die voranstehend erläuterte Befestigungseinrichtung 10 und umfasst ein Gehäuse 42, das unter Zwischenlage eines auswechselbaren Dichtringes 43 an einen Untergrund 44 angelegt werden kann. Das Gehäuse 42 weist eine Bodenwand 46 und eine Deckenwand 47 auf, die über eine Stirnwand 48 und eine Rückwand 49 einstückig miteinander verbunden sind. Die Stirnwand 48 bildet eine Saugplatte aus, an deren dem Untergrund 14 zugewandter Außenseite 50 der Dichtring 43 gehalten ist.

Das Gehäuse 42 weist außerdem eine Zwischenwand 52 auf, die doppelwandig ausgebildet ist und das Gehäuse 42 in eine erste Gehäusekammer 53 und eine zweite Gehäusekammer 54 unterteilt. Die Zwischenwand 52 weist eine erste , der ersten Gehäusekammer 53 zugewandte Wandschicht 56 auf sowie eine zweite, der zweiten Gehäusekammer zugewandte Wandschicht 57, die parallel und im Abstand zueinander angeordnet sind und zwischen sich einen Strömungskanal 59 definieren, der die Stirnwand 48 durchgreift und in den Zwischenraum 60 zwischen der Stirnwand 48 und dem Untergrund 44 einmündet.

Die erste Gehäusekammer 53 nimmt eine Membranpumpe 62, eine Batterie 63 sowie ein elektrisches Schaltorgan 64 auf, das mit einem Betätigungselement 65 die Rückwand 49 durchgreift. Über ein Verbindungskabel 66 steht das Schaltorgan 64 mit der Membranpumpe 62 in elektrischer Verbindung, und mittels eines flexiblen Saugschlauches 68 wird innerhalb der ersten Gehäusekammer 53 eine Strömungsverbindung hergestellt zwischen der Membranpumpe 62 und dem Strömungskanal 59. Der Strömungskanal 59 ist vollständig von einem Filterelement 61 ausgefüllt.

Außerdem nimmt die erste Gehäusekammer 53 ein Belüftungsventil 55 auf, das eine Strömungsverbindung zwischen einer Belüftungsöffnung 58 der Stirnwand 48 und einer in die Bodenwand 46 eingeformten Durchgangsöffnung 67 steuert. Entsprechend dem voranstehend unter Bezugnahme auf die Figur 1 erläuterten Belüftungsventil 37 kann auch das Belüftungsventil 55 mittels eines Schaltstößels 69 ausgehend von seiner Schließstellung entgegen der Wirkung einer Schließfeder in eine Offenstellung überführt werden zum Belüften des Zwischenraums 60.

In die Deckenwand 47 ist eine schwalbenschwanzförmige Nut 70 eingeformt, die eine Aufnahme ausbildet zum formschlüssigen Verbinden eines temporär am Untergrund 44 zu befestigenden Gegenstandes mit dem Gehäuse 42.

Soll ein Gegenstand mittels der Befestigungseinrichtung 40 temporär am Untergrund 44 befestigt werden, so kann er mit einer komplementär zur Nut 70 ausgestalteten Leiste durch Einführen derselben in die Nut 70 mit dem Gehäuse 42 lösbar verbunden werden. Das Gehäuse 42 kann dann mit der Stirnwand 48 an den Untergrund 44 angelegt werden, und durch Einschalten der Membranpumpe 62 kann der Zwischenraum 60 abgesaugt werden, so dass das Gehäuse 42 pneumatisch am Untergrund 44 anhaftet, so lange die Membranpumpe 62 in Betrieb ist. Wird die Membranpumpe 62 vom Benutzer ausgeschaltet und der Schaltstößel 69 betätigt, so baut sich der Unterdruck im Zwischenraum 60 aufgrund der Belüftung über das Belüftungsventil 55 ab und das Gehäuse 42 kann wieder vom Untergrund 44 entfernt werden.

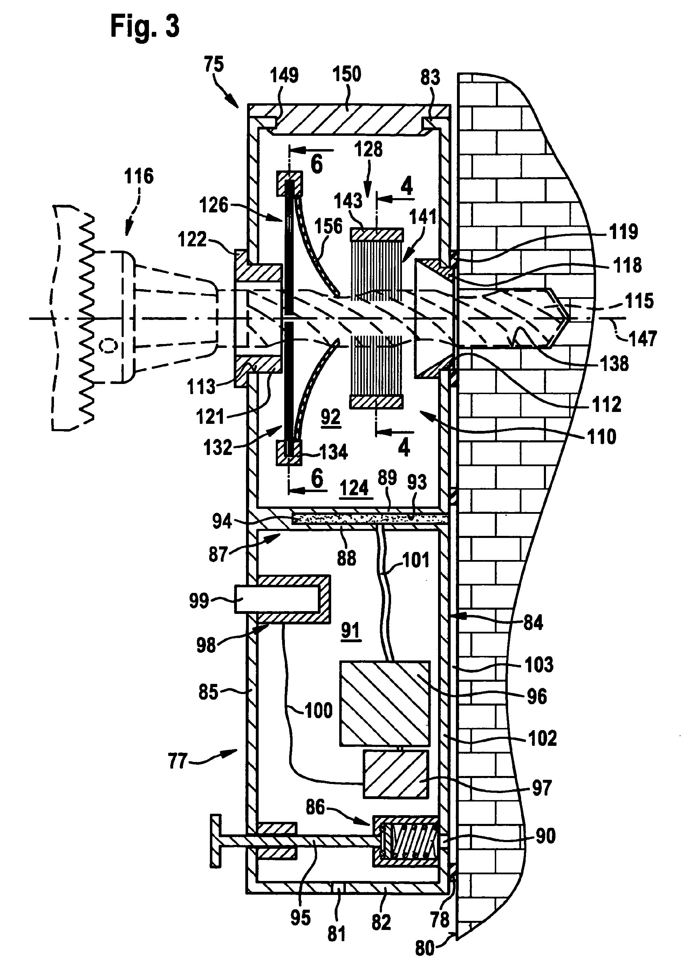

In den Figuren 3 bis 7 ist eine Ausführungsform einer insgesamt mit dem Bezugszeichen 75 belegten erfindungsgemäßen Befestigungseinrichtung dargestellt. Diese weist ein Gehäuse 77 auf, das unter Zwischenlage eines auswechselbaren Dichtringes 78 an einen Untergrund 80 angelegt werden kann, insbesondere an eine Gebäudewand oder eine Gebäudedecke. Wiederum weist das Gehäuse 77 eine Bodenwand 82 und eine Deckenwand 83 auf, die über eine Stirnwand 84 und eine Rückwand 85 einstückig miteinander verbunden sind. Zusätzlich umfasst das Gehäuse 77 eine Zwischenwand 87, die die Stirnwand 84 mit der Rückwand 85 einstückig verbindet und doppelwandig ausgestaltet ist mit einer ersten Wandschicht 88 und einer zweiten Wandschicht 89.

Durch die Zwischenwand 87 wird das Gehäuse 77 in eine erste Gehäusekammer 91 und eine zweite Gehäusekammer 92 unterteilt, und zwischen der ersten Wandschicht 88 und der zweiten Wandschicht 89 verläuft ein Strömungskanal 93, der ein Filterelement 94 aufnimmt und in dem vom Dichtring 78 umgebenen Bereich die Stirnwand 84 durchgreift.

Die erste Gehäusekammer 91 nimmt eine Membranpumpe 96, eine Batterie 97 und ein elektromechanisches Schaltorgan 98 mit einem Betätigungselement 99 auf, wobei das Schaltorgan 98 über ein Verbindungskabel 100 elektrisch mit der Membranpumpe 96 verbunden ist und die Membranpumpe 96 über einen flexiblen Saugschlauch 101 mit dem Strömungskanal 93 in Strömungsverbindung steht. Außerdem nimmt die erste Gehäusekammer 91 ein Belüftungsventil 86 auf, das innenseitig an einer Belüftungsöffnung 90 der Stirnwand 84 angeordnet ist und vom Benutzer über einen Schaltstößel 95 betätigt werden kann. Das Belüftungsventil 86 nimmt aufgrund des Einsatzes einer Schließfeder selbsttätig seine Schließstellung ein, in der es eine Strömungsverbindung zwischen der Belüftungsöffnung 90 und einer in die Bodenwand 82 eingeformten Durchgangsöffnung 81 unterbricht. Durch Betätigen des Schaltstößels 95 kann der Benutzer das Belüftungsventil 86 in seine Offenstellung überführen.

Im Bereich des Dichtringes 78 bildet die Stirnwand 84 eine Saugplatte 102 aus, an deren Außenseite der Dichtring 78 gehalten ist und die zusammen mit dem Untergrund 80 einen Zwischenraum 103 begrenzt, der von der Membranpumpe 96 über den Saugschlauch 101 und den Strömungskanal 93 abgesaugt werden kann, so dass das Gehäuse 77 pneumatisch am Untergrund 80 anhaftet. Soll der Zwischenraum 103 belüftet werden, so kann hierzu der Benutzer den Schaltstößel 95 betätigen, so dass das Belüftungsventil 86 in seine Offenstellung übergeht und dadurch der Zwischenraum 103 über die Belüftungsöffnung 90 belüftet werden kann.

Während die in den Figuren 1 und 2 dargestellten Befestigungseinrichtungen 10 bzw. 40 mit einem temporär am jeweiligen Untergrund 14 bzw. 44 zu befestigenden Gegenstand lösbar verbindbar sind, ist in das Gehäuse 77 der in Figur 3 dargestellten Befestigungseinrichtung 75 ein zu befestigender Gegenstand in Form einer Bohrschmutzaufnahmeeinrichtung 110 integriert. Die zweite Gehäusekammer 92 weist hierzu in der Stirnwand 84 und der Rückwand 85 jeweils eine Gehäuseöffnung 112 bzw. 113 auf, die miteinander fluchten und von einem in den Figuren 3 bis 6 gestrichelt dargestellten Bohrer 115 durchgriffen werden können. Der Bohrer 115 ist drehfest an einer in Figur 3 teilweise dargestellten Bohrmaschine 116 gehalten.

Die stirnseitige Gehäuseöffnung 112 ist von einer auswechselbaren Schmutzführungshülse 118 durchgriffen, die sich in Richtung auf das Innere der zweiten Gehäusekammer 92 konisch erweitert und nach innen und nach außen über die Stirnwand 84 hervorsteht. In ihrem nach außen vorstehenden Bereich ist die Schmutzführungshülse 118 von einem flexiblen, elastisch verformbaren Dichtring 119 umgeben, der unmittelbar an den Untergrund 80 anlegbar ist. Die rückseitige Gehäuseöffnung 113 ist von einer Führungsbuchse 121 durchgriffen, die ebenso wie die Schmutzführungshülse 118 aus gehärtetem Metall gefertigt ist und die an der rückseitigen Gehäuseöffnung 113 auswechselbar gehalten ist. Sie kann in die rückseitige Gehäuseöffnung 113 eingesetzt werden, wobei sie mit einem auskragenden Bund 122 außenseitig an der Rückwand 113 des Gehäuses 77 anliegt.

Die zweite Gehäusekammer 92 definiert in ihrem Inneren einen Bohrschmutzsammelraum 124 und nimmt eine erste Reinigungseinrichtung in Form einer ersten Reinigungsbürste 126 und eine zweite Reinigungseinrichtung in Form einer zweiten Reinigungsbürste 128 auf. Mittels der ersten Reinigungsbürste 126 wird der Bohrer 115 beim Herausziehen aus der zweiten Gehäusekammer 92 abgestreift, und mittels der zweiten Reinigungsbürste 128 kann der rotierende Bohrer beim Einbringen einer Bohrung in den Untergrund 80 abgereinigt werden. Die zweite Reinigungsbürste 128 ist zwischen der ersten Reinigungsbürste 126 und der stirnseitigen Gehäuseöffnung 112 angeordnet, die erste Reinigungsbürste 126 ist der rückseitigen Gehäuseöffnung 113 benachbart positioniert.

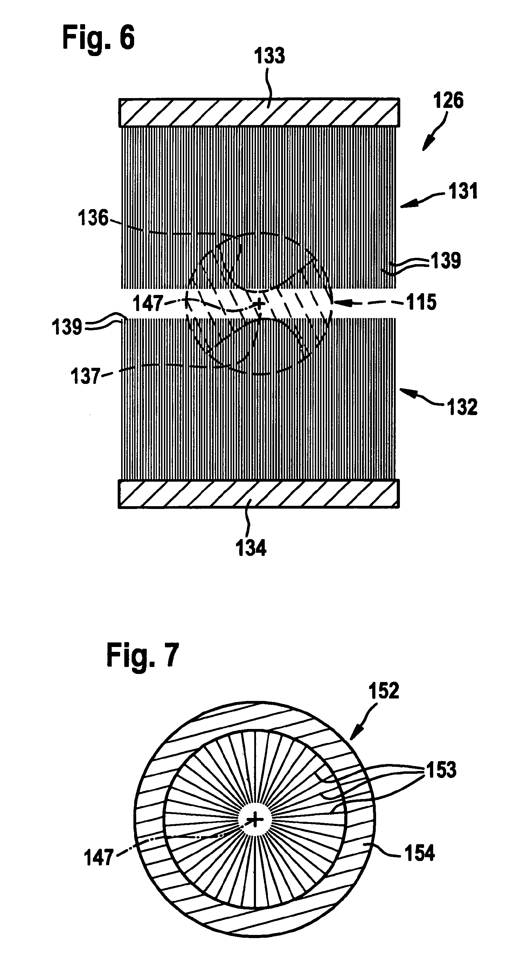

Wie insbesondere aus Figur 6 deutlich wird, ist die erste Reinigungsbürste 126 als Doppelbürste ausgestaltet und umfasst zwei Borstenreihen 131, 132, die einander zugewandt sind und jeweils an einem im Querschnitt U-förmigen Borstenhalter 133 bzw. 134 gehalten sind. Die beiden Borstenreihen 131, 132 nehmen zwischen sich den Bohrer 115 auf. Dieser weist zwei einander diametral gegenüberliegende Bohrnuten 136, 137 auf, die den Bohrer 115 wendelförmig umgeben und Bohrschmutz, also Bohrmaterial und Bohrstaub, aus einem Bohrloch 138 des Untergrundes 80 in das Innere der zweiten Gehäusekammer 92 überführen. Nach erfolgtem Einbringen einer Bohrung kann der Bohrer 115 aus der zweiten Gehäusekammer 92 herausgezogen werden, wobei er von den Borstenreihen 131, 132 abgestreift wird. Hierzu weisen die Borstenreihen 131, 132 Borsten 139 auf, deren Länge so gewählt ist, dass sie den Grund der Bohrnuten 136, 137 erreichen und diese von Bohrschmutz befreien können.

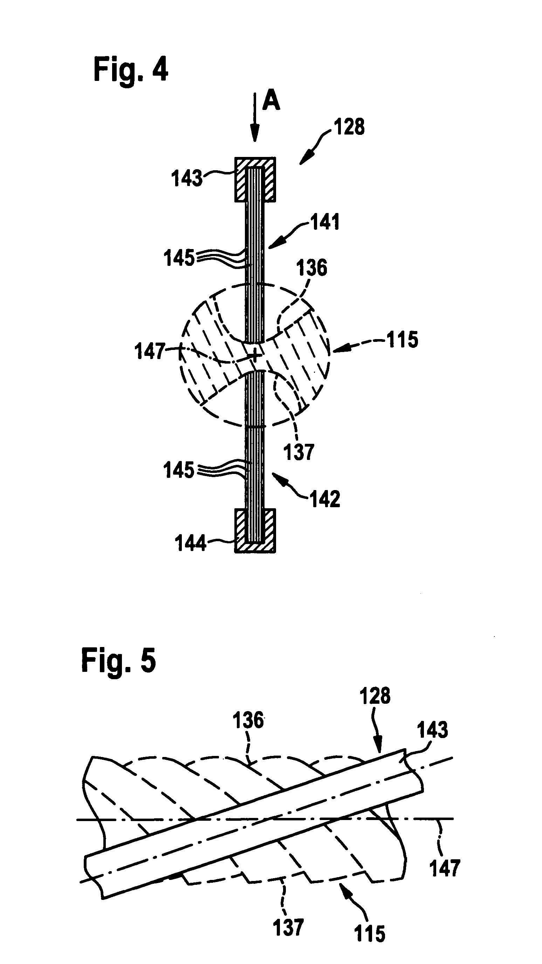

Wie aus Figur 4 ersichtlich ist, ist auch die zweite Reinigungsbürste 128 als Doppelbürste ausgestaltet und weist zwei Borstenreihen 141, 142 auf, die einander zugewandt sind und zwischen sich den Bohrer 115 aufnehmen. Sie sind jeweils an einem im Querschnitt U-förmigen Borstenhalter 143 bzw. 144 gehalten und umfassen Borsten 145, deren Länge wiederum so gewählt ist, dass sie bis zum Grund der Bohrnuten 136, 137 reichen.

Während die Borstenreihen 131, 132 der ersten Reinigungsbürste 126 senkrecht zur Längsachse 147 des Bohrers 115 ausgerichtet sind, verlaufen die Borstenreihen 141, 142 der zweiten Reinigungsbürste 128 in einem spitzen Winkel zur Längsachse 147. Dies hat zur Folge, dass den Borstenreihen 141, 142 der Bohrschmutz vom rotierenden Bohrer 115 beim Einbringen einer Bohrung in den Untergrund 80 seitlich zugeführt wird, so dass er mittels der Borsten 145 ungefähr in Längsrichtung der Bohrnuten 136, 137 aus diesen herausgebürstet werden kann. Mittels der zweiten Reinigungsbürste 128 kann somit während des Einsatzes des Bohrers 115 Bohrschmutz zuverlässig von diesem entfernt werden. Der Bohrschmutz sammelt sich im Bohrschmutzsammelraum 124 an, und über eine Deckenöffnung 149, die von einem Deckel 150 verschließbar ist, kann der Bohrschmutzsammelraum 124 der zweiten Gehäusekammer 92 entleert werden.

In Figur 7 ist eine alternative Ausgestaltung sowohl der ersten Reinigungsbürste 126 als auch der zweiten Reinigungsbürste 128 dargestellt in Form einer Ringbürste 152. Diese umfasst eine Vielzahl von radial zur Längsachse 147 des Bohrers 115 verlaufenden Borsten 153, die an einem Haltering 154 gehalten sind. Die erste Reinigungsbürste 126 kann ebenso wie die zweite Reinigungsbürste 128 in Form der Ringbürste 152 ausgestaltet sein, die vom Bohrer 115 durchgriffen werden kann.

Auf der der zweiten Reinigungsbürste 128 zugewandten Seite ist die erste Reinigungsbürste 126 von einer Abdeckung 156 abgedeckt. Diese ist als flexible Gummimembran ausgebildet in Form des Mantels eines Kegelstumpfes, der zentral vom Bohrer 115 durchgriffen werden kann. Mittels der Abdeckung 156 wird Bohrschmutz bezogen auf die Längsachse 147 radial nach außen geführt. Wird der Bohrer 115 aus der zweiten Gehäusekammer 92 herausgezogen, so ist mittels der Abdeckung 156 in Kombination mit der ersten Reinigungsbürste 126 sichergestellt, dass der Bohrer 115 abgestreift und somit an diesem anhaftender Bohrschmutz entfernt wird, und gleichzeitig ist gewährleistet, dass kein Bohrschmutz über die rückseitige Gehäuseöffnung 113 aus dem Gehäuse 77 entweichen kann. Dies gilt insbesondere bei vertikaler Ausrichtung des Bohrers 115, das heißt bei Einbringen einer Bohrung in eine Decke. Auch in diesem Fall wird sämtlicher Bohrstaub, der beim Bohren anfällt, innerhalb der zweiten Gehäusekammer 92 gesammelt.

Wie bereits erläutert, kann die Bohrschmutzauffangeinrichtung 110 durch Absaugen des Zwischenraumes 103 zuverlässig am Untergrund 80 gehalten werden zum Einbringen einer Bohrung in den Untergrund 80. Während des Einbringens bleibt die Membranpumpe 96 eingeschaltet. Nachdem eine Bohrung in den Untergrund 80 eingebracht wurde, kann der Bohrer 115 aus der zweiten Gehäusekammer 92 herausgezogen werden, und anschließend kann die Membranpumpe 96 mittels des Schaltorganes 98 ausgeschaltet werden. Es kann dann kurzzeitig der Schaltstößel 95 betätigt werden, so dass der Zwischenraum 103 belüftet wird und das Gehäuse 77 vom Untergrund 80 entfernt werden kann.

Zusätzlich zur Bohrschmutzauffangeinrichtung 110 kann in das Gehäuse 77 eine an sich bekannte und deshalb in der Zeichnung nicht dargestellte Markierungseinrichtung, insbesondere eine Lasermarkierungseinrichtung, sowie eine Messeinrichtung und eine Libelle integriert sein. Mittels der Messeinrichtung kann die gewünschte Position für eine Bohrung am Untergrund 80 bestimmt werden, und mittels der Markierungseinrichtung kann eine Markierung vorgenommen werden. Die notwendige Befestigung am Untergrund 80 erfolgt durch den Einsatz der Membranpumpe 96, so dass der Benutzer jeweils beide Hände frei hat und beispielsweise mit beiden Händen die Bohrmaschine 116 sicher halten kann.

## Patentansprüche

1. Befestigungseinrichtung zum lösbaren Befestigen eines Gegenstandes an einem Untergrund (80), mit einer Saugplatte(102), an der ein Dichtring (78) gehalten ist zur Anlage am Untergrund (80), und mit einer elektrischen Vakuumpumpe (96), mit der ein vom Dichtring abdichtbarer Zwischenraum (103) zwischen der Saugplatte (102) und dem Untergrund (80) mit Unterdruck beaufschlagbar ist, wobei die Saugplatte (102) in ein Gehäuse (77) integriert ist, das die Vakuumpumpe (96), eine Batterie (97) sowie ein elektrisches Schaltorgan (98) zum Ein- und Ausschalten der Vakuumpumpe (96) aufnimmt, **dadurch gekennzeichnet, dass** das Gehäuse (77) einen Strömungskanal (93) ausbildet, der mit der Vakuumpumpe (96) in Strömungsverbindung steht und in dem vom Dichtring (78) umgebenen Bereich die Saugplatte (102) durchgreift und der in einer Zwischenwand (87) des Gehäuses (77) verläuft, wobei die Zwischenwand (87) das Gehäuse (77) in zwei Gehäusekammern (91, 92) unterteilt, wobei eine erste Gehäusekammer (91) die Vakuumpumpe (96), die Batterie (97) und das Schaltorgan (98) aufnimmt und wobei in die zweite Gehäusekammer (92) eine Bohrschmutzauffangeinrichtung (110) integriert ist und die zweite Gehäusekammer (92) von einem Bohrer (115) durchsetzbar ist zum Einbringen einer Bohrung in den Untergrund (80), wobei die zweite Gehäusekammer (92) einen Bohrschmutzsammelraum (124) definiert und mindestens eine Reinigungseinrichtung (126, 128) aufnimmt zum Abreinigen des Bohrers (115).

2. Befestigungseinrichtung nach Anspruch 1, **dadurch gekennzeichnet, dass** die Befestigungseinrichtung ein Belüftungselement (86) aufweist zum Belüften des Zwischenraums (103).

3. Befestigungseinrichtung nach Anspruch 2, **dadurch gekennzeichnet, dass** das Belüftungselement (86) manuell betätigbar ist.

4. Befestigungseinrichtung nach Anspruch 2 oder 3, **dadurch gekennzeichnet, dass** das Belüftungselement ein federelastisch in eine Schließstellung vorgespanntes Belüftungsventil (86) umfasst.

5. Befestigungseinrichtung nach einem der voranstehenden Ansprüche, **dadurch gekennzeichnet, dass** im Strömungskanal (93) ein Filterelement (94) angeordnet ist.

6. Befestigungseinrichtung nach einem der voranstehenden Ansprüche, **dadurch gekennzeichnet, dass** eine erste Reinigungseinrichtung zumindest eine den Bohrer (115) beim Herausziehen aus der zweiten Gehäusekammer (92) abstreifende erste Reinigungsbürste (126) umfasst.

7. Befestigungseinrichtung nach Anspruch 6, **dadurch gekennzeichnet, dass** die zweite Gehäusekammer (92) zwei fluchtend zueinander ausgerichtete, vom Bohrer (115) durchsetzbare Gehäuseöffnungen (112, 113) aufweist, wobei eine stirnseitige Gehäuseöffnung (112) dem Untergrund (80) zugewandt und eine rückseitige Gehäuseöffnung (113) dem Untergrund (80) abgewandt ist und wobei die erste Reinigungseinrichtung (126) die rückseitige Gehäuseöffnung (113) zumindest teilweise überdeckt.

8. Befestigungseinrichtung nach Anspruch 6 oder 7, **dadurch gekennzeichnet, dass** eine zweite Reinigungseinrichtung zumindest eine den rotierenden Bohrer (115) beim Bohren abstreifende zweite Reinigungsbürste (128) umfasst.

9. Befestigungseinrichtung nach Anspruch 8, **dadurch gekennzeichnet, dass** eine zweite Reinigungsbürste (128) zumindest eine Borstenreihe (141, 142) aufweist, die parallel oder in einem spitzen Winkel zur Bohrerlängsachse (147) ausgerichtet ist.

10. Befestigungseinrichtung nach einem der Ansprüche 7 bis 9, **dadurch gekennzeichnet, dass** die stirnseitige Gehäuseöffnung (112) von einer Schmutzführungshülse (118) durchgriffen ist.

11. Befestigungseinrichtung nach Anspruch 10, **dadurch gekennzeichnet, dass** die Schmutzführungshülse (118) an der zweiten Gehäusekammer (92) auswechselbar gehalten ist.

12. Befestigungseinrichtung nach einem der Ansprüche 8 bis 11, **dadurch gekennzeichnet, dass** die rückseitige Gehäuseöffnung (113) von einer Führungsbuchse (121) durchgriffen ist.

13. Befestigungseinrichtung nach Anspruch 12, **dadurch gekennzeichnet, dass** die Führungsbuchse (121) an der rückseitigen Gehäuseöffnung (113) auswechselbar gehalten ist.

## Claims

1. Fastening device for releasably fastening an article to a base (80), with a suction plate (102) on which a sealing ring (78) is held for abutment on the base (80), and with an electric vacuum pump (96) with which underpressure can be applied to an intermediate space (103), sealable by the sealing ring, between the suction plate (102) and the base (80), the suction plate (102) being integrated into a housing (77) which accommodates the vacuum pump (96), a battery (97) and an electric switching element (98) for switching the vacuum pump (96) on and off, **characterized in that** the housing (77) forms a flow channel (93), which is in flow connection with the vacuum pump (96), and in the area surrounded by the sealing ring (78) passes through the suction plate (102), and which extends in a partition wall (87) of the housing (77), the partition wall (87) dividing the housing (77) into two housing chambers (91, 92), a first housing chamber (91) accommodating the vacuum pump (96), the battery (97) and the switching element (98), and a drilling debris catching device (110) being integrated into the second housing chamber (92), and a drill (115) being insertable through the second housing chamber (92) for drilling a hole in the base (80), the second housing chamber (92) defining a drilling debris collection space (124) and accommodating at least one cleaning device (126, 128) for cleaning the drill (115).

2. Fastening device in accordance with claim 1, **characterized in that** the fastening device comprises a ventilation element (86) for ventilating the intermediate space (103).

3. Fastening device in accordance with claim 2, **characterized in that** the ventilation element (86) is manually actuatable.

4. Fastening device in accordance with claim 2 or 3, **characterized in that** the ventilation element comprises a ventilation valve (86) which is spring-elastically pretensioned into a closed position.

5. Fastening device in accordance with any one of the preceding claims, **characterized in that** a filter element (94) is arranged in the flow channel (93).

6. Fastening device in accordance with any one of the preceding claims, **characterized in that** a first cleaning device comprises at least one first cleaning brush (126) which wipes the drill (115) when it is pulled out of the second housing chamber (92).

7. Fastening device in accordance with claim 6, **characterized in that** the second housing chamber (92) comprises two housing openings (112, 113) which are oriented in alignment with each other and through which the drill (115) can be inserted, with a front housing opening (112) facing the base (80) and a rear housing opening (113) facing away from the base (80), and with the first cleaning device (126) at least partially covering the rear housing opening (113).

8. Fastening device in accordance with claim 6 or 7, **characterized in that** a second cleaning device comprises at least one second cleaning brush (128) which wipes the rotating drill (115) during the drilling.

9. Fastening device in accordance with claim 8, **characterized in that** a second cleaning brush (128) comprises at least one row of brushes (141, 142) which is aligned parallel or at an acute angle to the longitudinal axis (147) of the drill.

10. Fastening device in accordance with any one of claims 7 to 9, **characterized in that** a debris guide sleeve (118) passes through the front housing opening (112).

11. Fastening device in accordance with claim 10, **characterized in that** the debris guide sleeve (118) is held so as to be exchangeable on the second housing chamber (92).

12. Fastening device in accordance with any one of claims 8 to 11, **characterized in that** a guide bushing (121) passes through the rear housing opening (113).

13. Fastening device in accordance with claim 12, **characterized in that** the guide bushing (121) is held so as to be exchangeable on the rear housing opening (113).

## Revendications

1. Dispositif de fixation destiné à la fixation détachable d'un objet contre une base (20), comprenant une plaque d'aspiration (102) contre laquelle est retenue une bague d'étanchéité (78) destinée à être en appui contre la base (80), et comprenant une pompe à vide électrique (96) au moyen de laquelle un espace intermédiaire (103) pouvant être étanchéifié par la bague d'étanchéité et disposé entre la plaque d'aspiration (102) et la base (80) peut être soumis à l'effet d'une dépression, la plaque d'aspiration (102) étant intégrée dans un boîtier (77) logeant la pompe à vide (96), une batterie (97) et un organe de commande électrique (98) destiné à activer et à désactiver la pompe à vide (96), **caractérisé en ce que** le boîtier (77) forme un canal d'écoulement (93) en liaison fluidique avec la pompe à vide (96), traversant la plaque d'aspiration (102) dans la zone entourée par la bague d'étanchéité (78) et s'étendant dans une cloison (87) du boîtier (77), la cloison (87) divisant le boîtier (77) en deux chambres (91, 92), une première chambre de boîtier (91) logeant la pompe à vide (96), la batterie (97) et l'organe de commande (98) et un dispositif de collecte de poussières d'alésage (110) étant intégré dans la seconde chambre de boîtier (92) et la seconde chambre de boîtier (92) pouvant être traversée par un foret (115) pour ménager un trou dans la base (80), la seconde chambre de boîtier (92) définissant un espace de collecte de poussières d'alésage (124) et logeant au moins un dispositif de nettoyage (126, 128) destiné à nettoyer le foret (115).

2. Dispositif de fixation selon la revendication 1, **caractérisé en ce que** le dispositif de fixation comprend un élément de ventilation (86) destiné à ventiler l'espace intermédiaire (103).

3. Dispositif de fixation selon la revendication 2, **caractérisé en ce que** l'élément de ventilation (86) peut être actionné manuellement.

4. Dispositif de fixation selon la revendication 2 ou 3, **caractérisé en ce que** l'élément de ventilation comprend une soupape de ventilation (86) précontraint de manière élastique dans une position fermée.

5. Dispositif de fixation selon l'une quelconque des revendications précédentes, **caractérisé en ce qu'**un élément filtrant (94) est disposé dans le canal d'écoulement (93).

6. Dispositif de fixation selon l'une quelconque des revendications précédentes, **caractérisé en ce qu'**un premier dispositif de nettoyage comprend au moins une première brosse de nettoyage (126) raclant le foret (115) lorsqu'il est extrait de la seconde chambre de boîtier (92).

7. Dispositif de fixation selon la revendication 6, **caractérisé en ce que** la seconde chambre de boîtier (92) comprend deux ouvertures de boîtier (112, 113) alignées l'une en direction de l'autre et pouvant être traversées par le foret (115), une ouverture de boîtier avant (112) étant tournée vers la base (80) et une ouverture de boîtier arrière (113) étant opposée à la base (80) et le premier dispositif de nettoyage (126) recouvrant au moins en partie l'ouverture de boîtier arrière (113).

8. Dispositif de fixation selon la revendication 6 ou 7, **caractérisé en ce qu'**un second dispositif de nettoyage comprend au moins une seconde brosse de nettoyage (128) raclant le foret rotatif (115) lors de l'alésage.

9. Dispositif de fixation selon la revendication 8, **caractérisé en ce qu'**une seconde brosse de nettoyage (128) comprend au moins une rangée de brosses (141, 142) orientée parallèlement à l'axe longitudinal (147) du foret ou en formant un angle aigu par rapport à celui-ci.

10. Dispositif de fixation selon l'une quelconque des revendications 7 à 9, **caractérisé en ce que** l'ouverture de boîtier avant (112) est traversée par un manchon de guidage des poussières (118).

11. Dispositif de fixation selon la revendication 10, **caractérisé en ce que** le manchon de guidage des poussières (118) est retenu de manière interchangeable sur la seconde chambre de boîtier (92).

12. Dispositif de fixation selon l'une quelconque des revendications 8 à 11, **caractérisé en ce que** l'ouverture de boîtier arrière (113) est traversée par une douille de guidage (121).

13. Dispositif de fixation selon la revendication 12, **caractérisé en ce que** la douille de guidage (121) est retenue de manière interchangeable sur l'ouverture de boîtier arrière (113).
